# EUROPEAN PATENT APPLICATION

(11) **EP 4 206 069 A1**
(43) Date of publication of application: **05.07.2023**
(21) Application number: 20951502.2
(22) Date of filing: 28.08.2020
(51) Int. Cl.: B63B 35/44

(54) **RENEWABLE ENERGY POWER GENERATION SYSTEM**

(71) Applicant: Hitachi, Ltd., Tokyo 100-8280 (JP)
(72) Inventor: WADA Norihisa, Tokyo 100-8280 (JP)
(74) Representative: Mewburn Ellis LLP
(86) International application number: PCT/JP2020/032570
(87) International publication number: WO 2022/044250

(57) **Abstract**

A renewable energy power generation system includes: a hydrogen production facility (120) that includes: a floating offshore wind power generation facility (10) that makes use of one or more renewable energies; and a floating offshore station (20) provided with a hydrogen production device that electrolytically produces hydrogen from sea water using electric energy generated by the floating offshore wind power generation facility (10), and a hydrogen storage device; and a remote control operation device (30) that selects a hydrogen production site where hydrogen is produced by the hydrogen production facility based on a hydrogen demand quantity, and performs a remote control of the hydrogen production facility.

## Description

### Technical Field

The present invention relates to a renewable energy power generation system.

### Background Art

Installation sites on the land where a renewable energy power generation facility can be installed are limited depending on to weather, geographical features and the like. Further, it is often the case that such installation sites where the renewable energy power generation facility can be installed are under a circumstance that a capacity of a power that can be supplied via a power transmission line of a power system is insufficient. Such circumstance is one of factors that obstruct the introduction of a power source acquired by renewable energy power generation. In view of such a circumstance, various types of renewable energy power generation on the sea have been studied.

PTL 1 discloses a renewable energy power generation system on the sea. A wind power generator, solar cell panels, and a wave power generator are mounted on a mega float that is a floating body capable of being moored on the sea. Using electric power generated by the wind power generator, solar cell panels or the wave power generator, sea water is subjected to an electrolysis in an energy conversion storage unit such that an oxygen gas and a hydrogen gas are generated by the electrolysis. The generated oxygen gas and hydrogen gas are liquefied and are stored in storage containers. The renewable energy power generation system is configured to be freely movable in conformity with the weather condition or the like.

PTL 2 provides a hydrogen recovery system that includes a hydrogen production plant that uses natural energy most efficiently, is freely movable, and is easily controllable from the land. The hydrogen recovery system can plan an optimal ship allocation schedule of the hydrogen transport tanker.

### Citation List

### Patent Literature

PTL 1: JP 2001-59472 A
PTL 2: JP 2003-72675 A

### Summary of Invention

### Technical Problem

PTL 1 provides a production device that is freely movable in conformity with weather conditions and the like. In PTL 2, the weather data and the marine observation data, which are factors in changing the position of the hydrogen production plant, are data such as the direction and magnitude of the tide, the wind power, or the sunlight. PTL 2 describes that the natural energy can be collected under the most favorable condition by moving the position of the hydrogen production plant in conformity with these natural conditions.

However, both literatures focus on power generation efficiency with natural energy and hence, there is a problem in terms of efficiency of a renewable energy power generation system that takes into account a user who uses the energy.

The present invention has been made to solve the above-described problem, and it is an object of the present invention to provide a renewable energy power generation system capable of improving utilization efficiency of the renewable energy power generation system including a user of energy.

### Solution to Problem

To achieve the above-mentioned object, a renewable energy power generation system according to the present invention includes: a hydrogen production facility that includes: a floating offshore power generation facility that makes use of one or more renewable energies; and a floating offshore station provided with a hydrogen production device that electrolytically produces hydrogen from sea water using electric energy generated by the floating offshore power generation facility, and a hydrogen storage device; and a remote control device that selects a hydrogen production site where hydrogen is produced by the hydrogen production facility based on a hydrogen demand quantity, and performs a remote control of the hydrogen production facility. Other aspects of the present invention will be described in the embodiments described hereinafter.

### Advantageous Effects of Invention

According to the present invention, it is possible to improve the utilization efficiency of a renewable energy power generation system including users of energy.

### Brief Description of Drawings

[FIG. 1] FIG. 1 is a diagram illustrating an overall configuration and an operation example of a floating offshore wind farm system according to a first embodiment.
[FIG. 2] FIG. 2 is a diagram illustrating a configuration of a floating offshore wind power generation facility.
[FIG. 3] FIG. 3 is a diagram illustrating a configuration of a floating offshore station.
[FIG. 4] FIG. 4 is a diagram illustrating details of a hydrogen production facility of the floating offshore wind farm system.
[FIG. 5] FIG. 5 is a block diagram illustrating a control block of a floating offshore wind power generation facility.
[FIG. 6] FIG. 6 is a block diagram illustrating a control block of a remote control operation room.
[FIG. 7] FIG. 7 is a diagram illustrating annual changes in an actual power demand.
[FIG. 8] FIG. 8 is a diagram illustrating an overall configuration and an operation example of a floating offshore mega solar system according to a second embodiment.

### Description of Embodiments

Embodiments for carrying out the present invention will be described in detail with reference to the drawings when desired.

### <<First embodiments

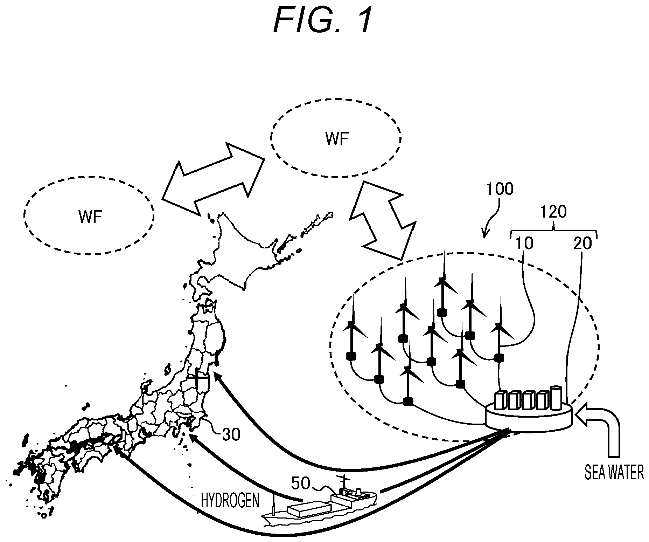

FIG. 1 is a diagram illustrating an overall configuration and an operation example of a floating offshore wind farm system 100 according to a first embodiment. The floating offshore wind farm system 100 according to the first embodiment that forms a renewable energy power generation system includes : a hydrogen production facility 120 that includes: a floating offshore wind power generation facility 10 that makes use of one or more renewable energies; and a floating offshore station 20 provided with a hydrogen production device that electrolytically produces hydrogen from sea water using electric energy generated by the floating offshore wind power generation facility 10, and a hydrogen storage device; and a remote control operation device 30 (remote control device). A plurality of floating offshore wind power generation facilities 10 form a floating offshore wind farm WF.

That is, the floating offshore wind farm system 100 includes the hydrogen production facility 120 and the remote control operation device 30. The hydrogen production facility 120 includes the floating offshore wind power generation facility 10 and the floating offshore station 20. The floating offshore wind farm system WF is formed of the plurality of floating offshore wind power generation facilities 10. In the present embodiment, it is safe to say that the hydrogen production facility 120 is formed of the floating offshore wind farm WF and the floating offshore station 20. The hydrogen production facility 120 may be formed of one floating offshore wind farm WF and a plurality of floating offshore stations 20.

The remote control operation device 30 selects a demand site, and gives an instruction to a hydrogen carrying vessel 50 such that that the hydrogen carrying vessel 50 transports hydrogen to the demand site. Further, the remote control operation device 30 selects a hydrogen production site where hydrogen is produced by the hydrogen production facility 120 (a site of the hydrogen production facility 120) based on a hydrogen demand quantity, and remotely controls the movement of the hydrogen production facility 120. The remote control operation device 30 is installed in a facility on land, for example. However, the remote control operation device 30 may be installed on a ship.

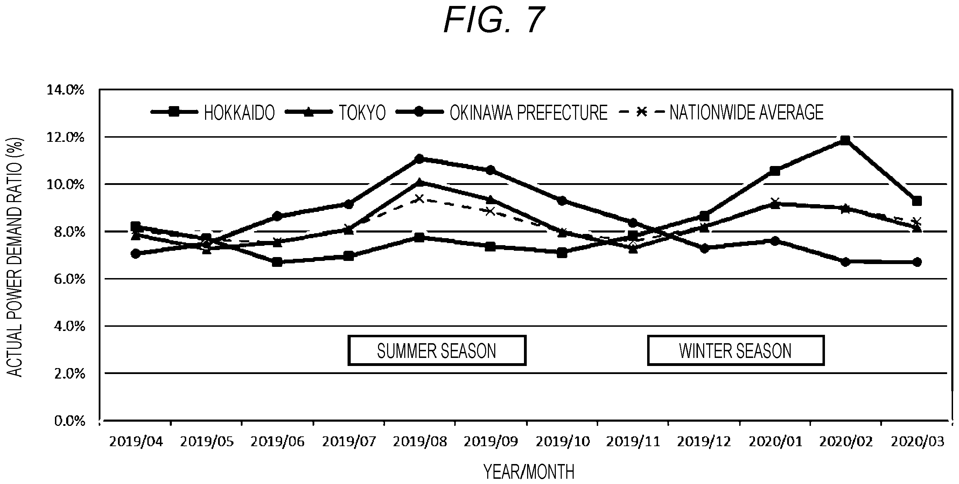

The remote control operation device 30 has the following technical features.
(1) The remote control operation device 30 can select a hydrogen production site near a harbor in the vicinity of a demand site corresponding to a hydrogen demand quantity. The remote control operation device 30 issues a movement instruction to the hydrogen production facility 120 in conformity with a demand of hydrogen in the season. The detail of the above-mentioned operation is described later with reference to FIG. 7.
(2) The remote control operation device 30 selects the hydrogen production site based on a determination made in a comprehensive manner based on weather information, a transport distance between the hydrogen production site and a hydrogen demand site, a sea route and a fishery.
(3) The remote control operation device 30 selects a position where a damage to the hydrogen production facility 120 caused by a typhoon is avoided in consideration of a predicted route of a typhoon.
(4) The remote control operation device 30 selects, when a hydrogen demand quantity is small, a maintenance harbor close to a current hydrogen production site so as to perform maintenance of the hydrogen production facility 120.
(5) The remote control operation device 30 detects the position of each of the floating offshore wind power generation facilities 10 by a GPS, and performs a position control of the floating offshore wind power generation facilities 10 by a radio signal.
(6) The remote control operation device 30, at the time of issuing an instruction to move the floating offshore wind power generation facility 10 to the hydrogen production site, monitors a residual storage quantity of the battery of each power generation facility of the floating offshore wind power generation facility 10, stops movement of the floating offshore wind power generation facility 10 when the residual storage quantity becomes equal to or less than a predetermined value, and resumes the movement of the floating offshore wind power generation facility 10 after charging of the battery by the floating offshore wind power generation facility 10 is completed.
(7) The remote control operation device 30 instructs the wind power generation device to change the arrangement of each power generation facility to an optimum arrangement so as to reduce a wake loss that affects a wind turbine on a rear stream side in a wind direction in response to a change in the wind direction.

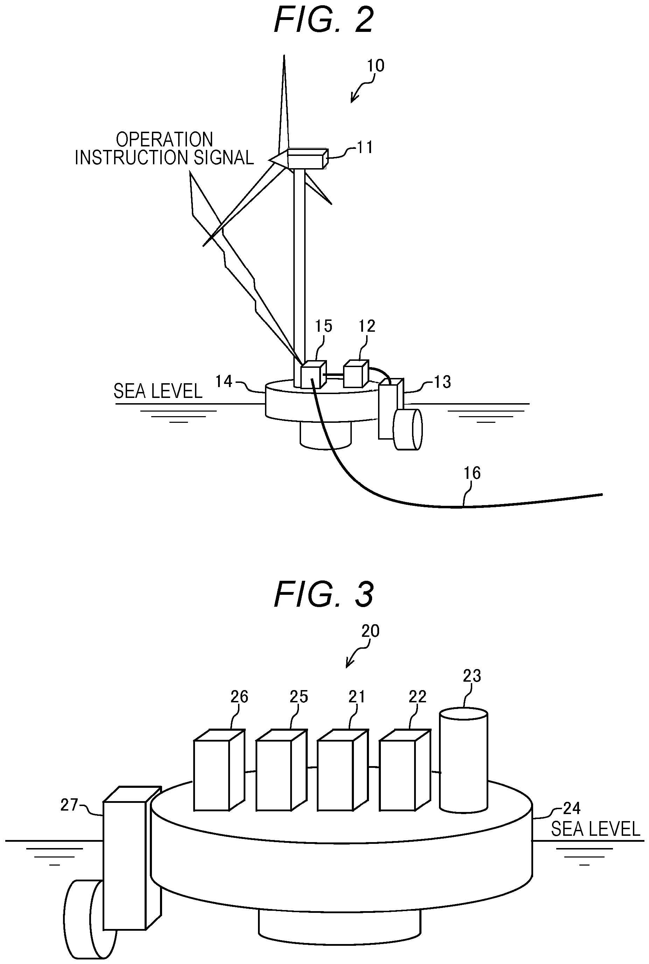

FIG. 2 is a diagram illustrating a configuration of the floating offshore wind power generation facility 10. The individual floating offshore wind power generation facility 10 has a power generation facility 11, a battery 12 and a controller 15 on a floating body 14. The floating body 14 has an electrically operated drive device 13 that can drive the floating offshore wind power generation facility 10 using the electric energy of the battery 12. Electric energy from the power generation facility 11 can be charged into the battery 12, and can be transmitted to the floating offshore station 20 via a power transmission line 16.

FIG. 3 is a diagram illustrating a configuration of the floating offshore station 20. The floating offshore station 20 includes, on the floating body 24, a water electrolysis device 21 (hydrogen production device) that produces hydrogen by electrolysis of sea water using electric energy, an MCH converter 22 described later, and an MCH storage tank 23 (hydrogen storage device) that stores MCH (methylcyclohexane) produced by the MCH converter 22, a controller 25, and a battery 26. The floating body 24 has an electrically operated drive device 27 that can drive the floating offshore station 20 using the electric energy of the battery 26. The electric energy transmitted from the power generation facility 11 via the power transmission line 16 is charged into the battery 26.

The MCH converter 22 is a device that converts toluene into methylcyclohexane (MCH) by making toluene react with hydrogen. As described above, the MCH is stored in the MCH storage tank 23. In the present embodiment, hydrogen is transported in an MCH state by the hydrogen carrying vessel 50. Both toluene and MCH are in a liquid state at a normal temperature and at a normal pressure . A hydrogen gas at a normal temperature and at a normal pressure can be stored and transported as a liquid at a normal temperature and at a normal pressure having a volume that is 1/500 of the volume of the hydrogen gas at a normal temperature and at a normal pressure. Hydrogen is separated from MCH by a catalytic reaction at a hydrogen utilization site that is a transport destination, and is supplied. Toluene that is concurrently obtained can again be utilized as a raw material for producing MCH.

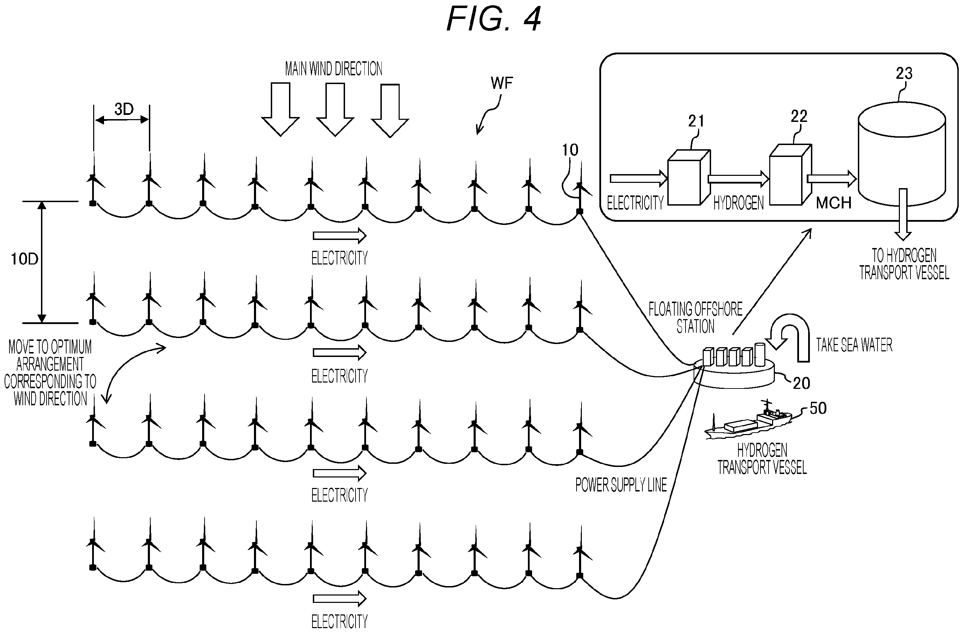

FIG. 4 is a diagram illustrating details of the hydrogen production facility of the floating offshore wind farm system 100. Electricity is collected from a plurality of floating offshore wind power generation facilities 10, that is, from the floating offshore wind farm WF, and hydrogen is produced by the water electrolysis device 21 on the floating offshore station 20. Then, hydrogen is converted into MCH by the MCH converter 22, and MCH is stored in the MCH storage tank 23. Then, MCH is transferred from the MCH storage tank 23 to the hydrogen carrying vessel 50.

It is effective that, in the floating offshore wind farm WF, the floating offshore wind power generation facilities 10 are arranged at an interval that is 10 times as large as a rotor diameter D of a wind turbine in the main wind direction and 3 times or more as large as the rotor diameter D of the wind turbine in the direction perpendicular to the main wind direction so as not to obstruct the mutual power generations of the floating offshore wind power generation facilities 10. It is possible to move the floating offshore stations 20 to the optimum arrangement corresponding to a change in the wind direction. For example, the rotor diameter D of the wind turbine is at a level of 130 m when an output of the wind turbine is 5 MW.

In the case of PTL 1, it is described that a plurality of wind power generators can be installed on the mega float. However, the installation position is fixed and hence, the installation position cannot be changed corresponding to the wind direction or the like. To the contrary, the floating offshore wind farm WF according to the present embodiment is formed of the plurality of floating offshore wind power generation facilities 10. Since individual floating offshore wind power generation facility 10 includes the electrically operated drive device 13, the floating offshore wind power generation facilities 10 can be moved to take the optimum arrangement corresponding to a change in the wind direction. More specifically, corresponding to a change in the wind direction, the remote control operation device 30 issues an instruction such that the arrangement of the individual floating offshore wind power generation facilities 10 of the floating offshore wind farm WF is changed to the optimum arrangement so as to reduce a wake loss that affects the wind turbine disposed on a rear stream side in the wind direction. Note that the wake loss is a phenomenon in which the output of a wind turbine that has entered the leeward side decreases when another wind turbine is located on the windward side of a certain wind turbine.

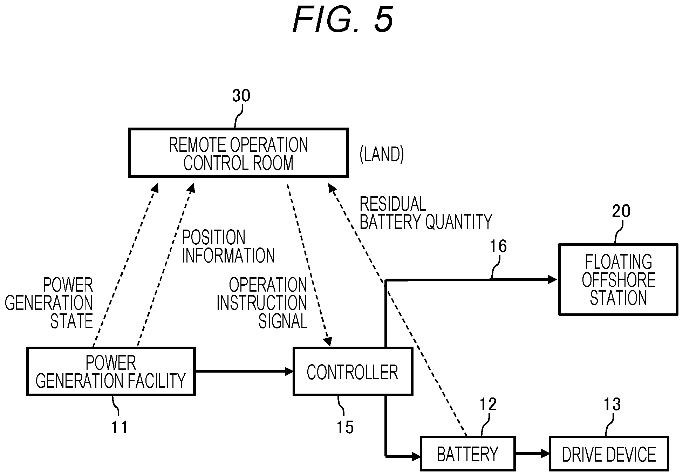

FIG. 5 is a block diagram illustrating a control block of the floating offshore wind power generation facility 10. The remote control operation device 30 acquires a power generation states and a position information from the power generation facility 11, and also acquires a residual battery quantity from the battery 12. When the residual battery quantity of the battery 12 is less than a predetermined value, the remote control operation device 30 issues an operation instruction to the controller 15 so as to make the controller 15 charge the battery 12. When the residual battery quantity of the battery 12 is equal to or higher than a predetermined value, the remote control operation device 30 instructions the controller 15 to transmit power to the floating offshore station 20 via the power transmission line 16.

In bringing the arrangement of the floating offshore wind power generation facilities 10 illustrated in FIG. 4 into the optimum arrangement, the remote control operation device 30 makes the controller 15 transmit position information (for example, a latitude and a longitude) to the floating offshore wind power generation facilities 10. Upon receiving the position information, the controller 15 of the floating offshore wind power generation facility 10 moves the floating offshore wind power generation facility 10 to the position by driving the electrically operated drive device 13.

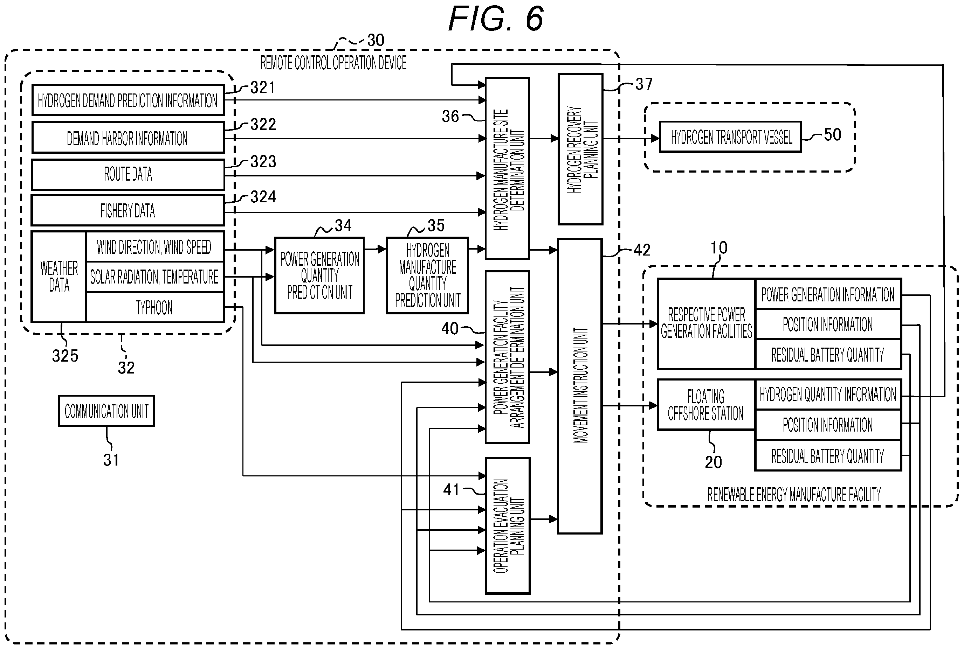

FIG. 6 is a block diagram illustrating a control block of the remote control operation device 30 (remote control device). The remote control operation device 30 includes: a communication unit 31 that communicates with the hydrogen production facility 120 (the floating offshore wind power generation facility 10 and the floating offshore station 20) ; a memory unit 32, a power generation quantity prediction unit 34; a hydrogen production quantity prediction unit 35; a hydrogen production site determination unit 36; a hydrogen recovery planning unit 37; a power generation facility arrangement determination unit 40; an operation evacuation planning unit 41; a movement instruction unit 42, and the like.

The power generation quantity prediction unit 34 predicts a power generation quantity of the floating offshore wind power generation facility 10 based on weather data 325. The hydrogen production quantity prediction unit 35 predicts a hydrogen production quantity based on a prediction quantity calculated by the power generation quantity prediction unit 34.

The hydrogen production site determination unit 36 determines a hydrogen production site based on hydrogen demand prediction information 321, demand harbor information 322, route data 323, fishery data 324, a hydrogen production quantity, and the hydrogen quantity information of the floating offshore station 20. The hydrogen recovery planning unit 37 makes a hydrogen recovery plan based on a hydrogen production site determined by the hydrogen production site determination unit 36, and gives an instruction to the hydrogen carrying vessel 50.

The power generation facility arrangement determination unit 40 determines the arrangement of each of the floating offshore wind power generation facilities 10 based on the weather data 325 (wind direction, wind speed, solar radiation quantity, atmospheric temperature), and the position information and the residual battery quantities among information of the respective power generation facilities (the floating offshore wind power generation facilities 10) and the floating offshore station 20. In determining the arrangement of the floating offshore wind power generation facilities 10, as described with reference to FIG. 4, corresponding to a change in the wind direction, the remote control operation device 30 issues an instruction such that the arrangement of the individual floating offshore wind power generation facilities 10 is changed to the optimum arrangement so as to reduce a wake loss that affects the wind turbine disposed on a rear stream side in the wind direction.

The movement instruction unit 42 instructs each power generation facility and the floating offshore station 20 to move in conformity with the hydrogen production site (the position of the hydrogen production facility 120) determined by the hydrogen production site determination unit 36 and the arrangement configuration of the floating offshore wind power generation facility 10 determined by the power generation facility arrangement determination unit 40. That is, the remote control operation device 30 moves the hydrogen production facility 120 to the hydrogen production site determined by the hydrogen production site determination unit 36, and instructs each power generation facility on detailed information of the arrangement configuration of the respective power generation facilities (floating offshore wind power generation facilities 10) that form the floating offshore wind farm WF at the hydrogen production site.

FIG. 7 is a diagram illustrating annual changes in an actual power demand. FIG. 7 illustrates actual power demand ratios (%) by month (fromApril 2019 to March 2020) with respect to the power demand ratio in northern Japan (Hokkaido), the power demand ratio in the Kanto region (Tokyo), the power demand ratio in southern Japan (Okinawa prefecture) and the power demand ratio on a nationwide average.

To compare the power demands in the respective regions, the power demand in winter is about 1.5 times higher than the power demand in summer in northern Japan (Hokkaido). Conversely, the power demand in summer is about 1.5 times higher than the power demand in winter in southern Japan (Okinawa Prefecture). In the Kanto region (Tokyo), although a change in the power demand between seasons is relatively small, the power demand in summer and the power demand in winter are high.

From the above, the operation of producing and supplying hydrogen in South Japan in the summer season and in North Japan in the winter season in conformity with the power demand can contribute to the stable supply of energy. Furthermore, the hydrogen production site and the demand site can be made close to each other and hence, the transportation distance of hydrogen can be shortened. Accordingly, this operation is economically effective.

### <<Second embodiment>>

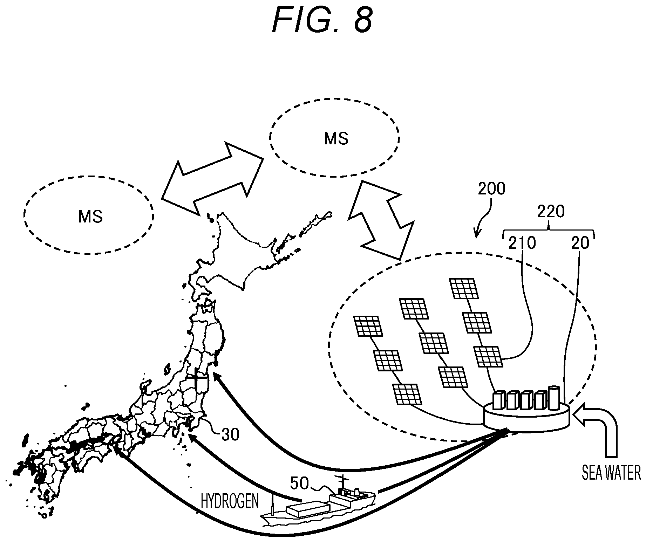

FIG. 8 is a diagram illustrating an overall configuration and an operation example of a floating offshore mega solar system 200 according to a second embodiment. The difference between the renewable energy power generation system illustrated in FIG. 1 and the renewable energy power generation system illustrated in FIG. 8 lies in whether a power generation device installed in the renewable energy power generation system is the floating offshore wind power generation facility 10 or a floating offshore solar power generation facility 210.

The floating offshore mega solar system 200 according to the second embodiment that forms a renewable energy power generation system includes: a hydrogen production facility 220 that includes: a floating offshore solar power generation facility 210 that makes use of one or more renewable energies; and a floating offshore station 20 provided with a hydrogen production device that electrolytically produces hydrogen from sea water using electric energy generated by the floating offshore solar power generation facility 210, and a hydrogen storage device; and a remote control operation device 30 (remote control device). A plurality of floating offshore solar power generation facilities 210 form a floating offshore mega solar MS. These correspondence relationships are substantially equal to those of the first embodiment.

The configuration of the floating offshore mega solar system 200 illustrated in FIG. 8 and the operation and advantageous effects of the floating offshore mega solar system 200 overlap with the contents described with respect to the first embodiment. Accordingly, the detailed description of the configuration of the floating offshore mega solar system 200 illustrated in FIG. 8 and the operation and advantageous effects of the floating offshore mega solar system 200 are omitted. However, the operation and the advantageous effects of the floating offshore wind farm system 100 described in the first embodiment are substantially as same as those of the floating offshore mega solar system 200 according to the present embodiment.

The renewable energy power generation systems (the floating offshore wind farm system 100 and the floating offshore mega solar system 200) of the present embodiments described above have the following technical features.

The renewable energy power generation system includes: the hydrogen production facility 120 that includes: a floating offshore power generation facility (for example, floating offshore wind power generation facility 10) that makes use of one or more renewable energies; and the floating offshore station 20 provided with a hydrogen production device (for example, the water electrolysis device 21, the MCH converter 22) that electrolytically produces hydrogen from sea water using electric energy generated by the floating offshore power generation facility, and the hydrogen storage device(for example, the MCH storage tank 23) ; and a remote control device (for example, the remote control operation device 30) that selects a hydrogen production site where hydrogen is produced by the hydrogen production facility 120 based on a hydrogen demand quantity, and performs a remote control of the hydrogen production facility. According to the present embodiments, it is possible to improve the utilization efficiency of the renewable energy power generation system including energy users.

The remote control device may preferably select a hydrogen production site near a harbor in the vicinity of a demand site corresponding to a hydrogen demand quantity. With such a configuration, the time and the transportation cost for hydrogen transportation can be reduced.

The remote control device selects the hydrogen production site based on a determination made in a comprehensive manner based on weather information, a transport distance between the hydrogen production site and a hydrogen demand site, a sea route and a fishery. With such a configuration, energy generated by renewable energy power generation can be efficiently generated and can be transported to a hydrogen demand site.

The remote control device may preferably select a position where a damage to the hydrogen production facility caused by a typhoon (weather) is avoided in consideration of a predicted route of a typhoon (weather information) . With such a configuration, damage to the renewable energy power generation system can be reduced.

The remote control device may preferably select, when a hydrogen demand quantity is small, a maintenance harbor close to a current hydrogen production site so as to perform maintenance of the hydrogen production facility. With such a configuration, a cost for maintenance of the renewable energy power generation system can be reduced.

The floating offshore power generation facility includes: the battery 12 configured to store generated electric energy; and the electrically operated drive device 13, and the renewable energy power generation system operates the electrically operated drive device 13 by discharging the electric energy from the battery 12 when it is necessary to move the floating offshore power generation facility so as to enable the floating offshore power generation facility to move to the hydrogen production site by itself. With such a configuration, it is possible to reduce a fuel cost, a fuel transportation cost and the like when the floating offshore power generation facility moves to the hydrogen production site.

The remote control device may preferably detect a position of the floating offshore power generation facility by a GPS, and may preferably perform a position control of the floating offshore power generation facility by a radio signal transmitted from the remote control device. With such a configuration, the position of the floating offshore power generation facility can be accurately managed.

The remote control device, at the time of issuing an instruction to move the floating offshore power generation facility to the hydrogen production site, may preferably monitor a residual storage quantity of the battery 12 of each power generation facility of the floating offshore power generation facility, may preferably stop movement of the floating offshore power generation facility when the residual storage quantity becomes equal to or less than a predetermined value, and may preferably resume the movement of the floating offshore power generation facility after charging of the battery by the floating offshore power generation facility is completed. With such a configuration, it is possible to reduce a fuel cost, a fuel transportation cost and the like when the floating offshore power generation facility moves to the hydrogen production site.

The floating offshore power generation facility may preferably be a wind power generation device or a solar power generation device. (see FIG.1 and FIG. 8). In the floating offshore power generation facility, the remote control device may preferably, in a case where the floating offshore power generation facility is a wind power generation device, instruct the wind power generation device to change the arrangement of each power generation facility to an optimum arrangement so as to reduce a wake loss that affects a wind turbine on a rear stream side in a wind direction in response to a change in the wind direction. With such a configuration, power can be efficiently generated by the renewable energy power generation system.

With respect to the storage and transportation of hydrogen, the case has been described where hydrogen is converted into MCH. However, hydrogen may be compressed to a high pressure of approximately several tens of MPs by a compressor and may be stored and transported by a high-pressure container. Further, hydrogen may be absorbed by a hydrogen absorbing alloy, and hydrogen may be stored and transported by a container in which the hydrogen absorbing alloy is contained.

Further, the case has been described where the MCH, that is, hydrogen is transported by the hydrogen carrying vessel 50. However, as a modification, a case may be adopted where hydrogen is transported without using the hydrogen carrying vessel. That is, in this modification, when the hydrogen production facility 120 is moved near a harbor in the vicinity of a demand site, the hydrogen production facility 120 (MCH storage tank 23) and an MCH receiving facility of the harbor are connected to each other by a pipe or the like, and MCH is supplied through the pipe. Toluene obtained after separation of hydrogen from MCH is returned to the hydrogen production facility 120 through a pipe in the same manner. Further, the present invention can adopt another modification where, when the hydrogen production facility 120 is moved near a harbor in the vicinity of the demand site, hydrogen is separated from MCH by the hydrogen production facility 120 and hydrogen is supplied to a facility on the land through a pipe. In this another modification, the transportation of MCH or toluene that is a liquid becomes unnecessary.

### Reference Signs List

- 10: floating offshore wind power generation facility
- 11: power generation facility
- 12: battery
- 13: electrically operated drive device
- 14: floating body
- 15: controller
- 16: power transmission line
- 20: floating offshore station
- 21: water electrolysis device (hydrogen production device)
- 22: MCH converter
- 23: MCH storage tank (hydrogen storage device)
- 24: floating body
- 25: controller
- 26: battery
- 27: electrically operated drive device
- 30: remote control operation device (remote control device)
- 31: communication unit
- 32: memory unit
- 321: hydrogen demand prediction information
- 322: demand harbor Information
- 323: route data
- 324: fishery data
- 325: weather data
- 34: power generation quantity prediction unit
- 35: hydrogen production quantity prediction unit
- 36: hydrogen production site determination unit
- 37: hydrogen recovery planning unit
- 40: power generation facility arrangement determination unit
- 41: operation evacuation planning unit
- 42: movement instruction unit
- 100: floating offshore wind farm system
- 120, 220: hydrogen production facility
- 200: floating offshore mega solar system
- 210: floating offshore solar power generation facility
- D: rotor diameter
- MS: floating offshore mega solar
- WF: floating offshore wind farm

## Claims

1. A renewable energy power generation system comprising:
a hydrogen production facility that includes: a floating offshore power generation facility that makes use of one or more renewable energies; and a floating offshore station provided with a hydrogen production device that electrolytically produces hydrogen from sea water using electric energy generated by the floating offshore power generation facility, and a hydrogen storage device; and
a remote control device that selects a hydrogen production site where hydrogen is produced by the hydrogen production facility based on a hydrogen demand quantity, and performs a remote control of the hydrogen production facility.

2. The renewable energy power generation system according to claim 1, wherein the remote control device selects a site near a harbor disposed in a vicinity of a demand site as the hydrogen production site in conformity with the hydrogen demand quantity.

3. The renewable energy power generation system according to claim 1, wherein the remote control device selects the hydrogen production site based on a determination made in a comprehensive manner based on weather information, a transport distance between the hydrogen production site and a hydrogen demand site, a sea route and a fishery.

4. The renewable energy power generation system according to claim 1, wherein the remote control device selects a position where a damage to the hydrogen production facility caused by a typhoon is avoided in consideration of a predicted route of a typhoon.

5. The renewable energy power generation system according to claim 1, wherein the remote control device selects, when the hydrogen demand quantity is small, a maintenance harbor close to a current hydrogen production site so as to perform maintenance of the hydrogen production facility.

6. The renewable energy power generation system according to claim 1, wherein
the floating offshore power generation facility includes: a battery configured to store generated electric energy; and an electrically operated drive device, and
the renewable energy power generation system operates the electrically operated drive device by discharging the electric energy from the battery when it is necessary to move the floating offshore power generation facility so as to enable the floating offshore power generation facility to move to the hydrogen production site by itself.

7. The renewable energy power generation system according to claim 1, wherein the remote control device detects a position of the floating offshore power generation facility by a GPS, and performs a position control of the floating offshore power generation facility by a radio signal transmitted from the remote control device.

8. The renewable energy power generation system according to claim 6, wherein the remote control device, at a time of issuing an instruction to move the floating offshore power generation facility to the hydrogen production site, monitors a residual storage quantity of the battery of each power generation facility of the floating offshore power generation facility, stops movement of the floating offshore power generation facility when the residual storage quantity becomes equal to or less than a predetermined value, and resumes the movement of the floating offshore power generation facility after charging of the battery by the floating offshore power generation facility is completed.

9. The renewable energy power generation system according to any one of claims 1 to 8, wherein the floating offshore power generation facility is a wind power generation device or a solar power generation device.

10. The renewable energy power generation system according to claim 1, wherein
the floating offshore power generation facility is a wind power generation device, and
the remote control device instructs the wind power generation device to change arrangement of each power generation facility to an optimum arrangement so as to reduce a wake loss that affects a wind turbine on a rear stream side in a wind direction in response to a change in the wind direction.
